# EUROPÄISCHE PATENTANMELDUNG

(11) **EP 1 087 070 A1**
(43) Veröffentlichungstag der Anmeldung: **28.03.2001**
(21) Anmeldenummer: 00117060.4
(22) Anmeldetag: 09.08.2000
(51) Int. Cl.: E04B 1/68

(54) **Ausgleichselement für Fugen**

(30) Priorität: 21.09.1999 DE 29916555 U
(71) Anmelder: Dittrich, Klaus-Jürgen, 28832 Achim (DE)
(72) Erfinder: Dittrich, Klaus-Jürgen, 28832 Achim (DE)

(57) **Zusammenfassung**

Es wird ein Ausgleichselement für die flexible Überbrückung einer Fuge zwischen zwei Bauteilen beschrieben. Die Hauptaufgabe solcher Elemente ist die elastische Verbindung beispielsweise zum Zweck des Abdichtens des durch die Bauteile eingeschlossenen Raumbereiches, zur Vermeidung des Eindringens von Schmutz in die Fuge bei gleichzeitiger Ermöglichung einer Relativbewegung beider Bauteile. Wesentliches Merkmal des beschriebenen Ausgleichselementes ist es, daß es als aus EPP-Schaum (expandiertes Polyolefin-Partikel) bestehender Faltenbalg ausgeformt ist und in Ausgleichsrichtung mindestens an seinem einen Ende ein einstückig angeformtes eigenstabiles Anschlußelement aufweist.

Derartige Bauteile werden häufig aus Gummi ausgeformt als Faltenbälge oder auch als Metallbalg z.B. in der Vakuumtechnik realisiert. Bekannte Ausführungen aus Gummi sind billig, finden aber dort wo Eigenstabilität verlangt wird, nur bedingt Anwendung. Insbesondere ist der Anschluß des Balgs an ein benachbartes Bauteil aufgrund der mangelnden Eigenstabilität erschwert. Metallbälge weisen zwar eine erheblich bessere Steifigkeit auf, sind aber nur mit hohem technischen Aufwand herstellbar. Der Erfindung liegt daher die Aufgabe zugrunde, ein Ausgleichselement zu schaffen das sowohl leicht montierbar, kostengünstig und dennoch eigenstabil ist. Diese Aufgabe wird dadurch gelöst, das das Ausgleichselement als aus EPP-Schaum (expandiertes Polyolefin-Partikel) bestehender Faltenbalg ausgeformt ist.

Eine der dargestellten Ausführungen ist einstückig und besteht aus einem Faltenbalg (3) als Dehnelement mit symmetrischen zickzack-Profil, einem Anschlußelement (1) in Form eines einseitig an diesen angeformten Einbaurahmens (1) und einer Dichtleiste (2). Der Einbaurahmen (1) und die Dichtleiste (2) sind auf die exakten Konturen der Anschlußgeometrie zugeschnitten, so daß auf dieser Seite des Ausgleichselementes ein hohes Maß an Abdichtung erzielt wird.

Die Vorteile der Erfindung sind die Möglichkeit die Materialeigenschaften im Herstellprozess des verwendeten EPP-Materials in weiten Bereichen an die geforderten Eigenschaften des Ausgleichselementes anpassen zu können, die kostengünstige Herstellung und die Möglichkeit eigenstabile Anschlußelemente realsieren zu können.

## Beschreibung

Bisher sind Ausgleichselemente für die flexible Überbrückung einer Fuge zwischen zwei Bauteilen häufig entweder aus Gummi oder ausgeformt als Faltenbälge auch aus Metall bekannt. Die Hauptaufgabe solcher Elemente ist die elastische Verbindung beispielsweise zum Zweck des Abdichtens des durch die Bauteile eingeschlossenen Raumbereichs, zur Vermeidung des Eindringens von Schmutz in die Fuge bei gleichzeitiger Ermöglichung einer Relativbewegung beider Bauteile.

Ein Anwendungsgebiet für Metallbälge ist die Vakuumtechnik, in der insbesondere die Eigenschaft der Steifigkeit des Ausgleichselements eine große Rolle spielt. Diese Metallbälge weisen neben ihrer Steifigkeit auch noch eine Reihe anderer technisch interessanter Eigenschaften auf, sie werden jedoch unter erheblichem technischen Aufwand gefertigt und sind daher sehr teuer.

Aus anderen Anwendungsgebieten sind Gummibälge bekannt. Diese sind deutlich billiger, finden aber dort, wo Eigenstabilität verlangt wird, nur bedingt Anwendung. Insbesondere ist der Anschluß des Balgs an ein benachbartes Bauteil auf Grund mangelnder Eigenstabilität erschwert. An dieser Stelle ist entweder eine Klebung oder eine komplizierte Klemmung des Gummis zum Abdichten erforderlich. Beides bedeutet einen zusätzlichen Kostenaufwand. Im Fall des Klebens handelt es sich zudem um eine dauerhafte Verbindung, die nur durch Zerstörung gelöst werden kann. Die Klemmung des Gummis ist erfahrungsgemäß oftmals sehr umständlich und erfordert viel Geschick oder einen größeren apparativen Aufwand.

Der Erfindung liegt daher die Aufgabe zu Grunde, ein Ausgleichselement zu schaffen, das sowohl leicht montierbar und dennoch kostengünstig in der Herstellung ist und das beispielsweise die beim Einbau wärmeerzeugender Geräte rückseitig entstehenden Fugen überbrücken und abdichten kann.

Diese Aufgabe wird durch eine Vorrichtung nach dem Oberbegriff des Anspruchs 1 dadurch gelöst, daß das Ausgleichelement für Fugen als aus EPo-Schaum (expandierte Polyolefin-Partikel) bestehender Faltenbalg ausgebildet ist und in Ausgleichsrichtung mindestens an seinem einen Ende ein einstückig angeformtes eigenstabiles Anschlußelement aufweist.

Es hat sich gezeigt, daß EPo-Schaum durch den Verarbeitungsprozess über weite Bereiche der Materialeigenschaften einstellbar ist, so daß insbesondere die zur Lösung der Aufgabe nötigen Materialeigenschaften vereinbar sind: gute Formstabilität und hinreichende Elastizität. Die Elastizität gewährleistet die typische Anforderung an einen Balg nämlich Flexibilität in Ausgleichsrichtung. Die Formstabilität bewirkt darüber hinaus eine gute Eigenstabilität des Ausgleichelements. Darin eingeschlossen ist die Eigenstabilität des Anschlußelemts, die eine zusätzliche Verstärkung durch materialfremde Bauteile - beispielsweise durch einen Metallrahmen - zum Zweck der einfachen Montage in den meisten Fällen unnötig macht. Besonders in der letztgenannten Eigenschaft ist daher ein Ausgleichselement aus EPo-Schaum einem aus Gummi überlegen und gewinnt um so mehr an Bedeutung, je größer die Abmessungen des Ausgleichselements sind. Zudem kann der Schaum unter Verwendung eines entsprechenden Werkzeugs insbesondere als Balg mit einstückig angeformtem Anschlußelement sehr aufwandsarm hergestellt werden.

Vorzugsweise kann das Ausgleichselement in der Ebene senkrecht zur Ausgleichsrichtung ringförmig geschlossen sein, um zusammen mit den in Ausgleichsrichtung angrenzenden Bauteilen einen Raum abzugrenzen und abzuschließen.

Als besonders vorteilhaft erweist sich eine Ausführungsform, bei der das Anschlußelement als ringförmig geschlossener Rahmen ausgebildet ist. Dieser kann in der Ebene senkrecht zur Ausbreitungsrichtung insbesondere einen rechteckigen Querschnitt aufweisen.

Mit Vorteil weist das Ausgleichselement in Ausgleichsrichtung an dem Anschlußelement und/oder an dem freien Ende eine oder mehrere Dichtkante/n oder Lippe/n einstückig angeformt auf. Damit kann eine besonders gute und immer noch kostengünstige Abdichtung des Ausgleichselements gegen das benachbarte Bauteil erzielt werden.

Bevorzugt dient ein solches Ausgleichselement dem abgedichteten Einbau eines elektrischen Kühlschranks oder eines anderen elektrischen Gerätes in einen entsprechenden Einbauschacht. Es ist bekannt, daß solche Geräte im Betrieb relativ viel Abwärme erzeugen, die zu einer Erhöhung der Temperatur der Umgebungsluft führt. Das stellt beispielsweise in Campingfahrzeugen ein Problem dar, da hier die Innenraumtemperatur schnell ansteigt. Es wurden deswegen abwärmeseitig hinter den Einbauschacht des Gerätes Schlitze in die Wand der Fahrzeugkarosserie gefügt. Die warme Abluft sollte durch oben befindliche Schlitze aus dem Fahrzeug heraus geleitet und Frischluft dem Innenraum durch weiter unten gelegene Schlitze in der Fahrzeugwand zugeführt werden. Das Ergebnis ist bekanntermaßen nicht sehr befriedigend: Ein großer Teil der Wärme blieb im Fahrzeug inneren. Mit einem erfindungsgemäßen Ausgleichselement, dessen Anschlußelement den abzudichtenden äußeren Konturen des Gerätes eng anliegend folgt und von dem das freie Ende des Faltenbalges mit Vorspannung an der die Schlitze aufweisenden Fahrzeugwand anliegt, kann nun der Raumbereich hinter dem Gerät preiswert und auf einfache Weise so isoliert werden, daß kein Luft- und Wärmeaustausch mit der übrigen Innenraumluft möglich ist.

In jeder der Ausführungsformen kommen der Erfindung - nicht allein für den beispielhaft geschilderten Verwendungszweck - weitere Materialeigenschaften des EPo-Schaums zu Gute: Ein Ausgleichselement aus EPo-Werkstoff weist eine sehr gute Vibrationsdämpfung auf und ist in diesem Punkt zumindest einem Metallbalg überlegen. Weiterhin werden gegenüber der Verwendung von Gummi- oder Metallbälgen gleichzeitig beträchtliche Kosten- und Gewichtseinsparungen möglich.

Es ergibt sich in dem speziellen Anwendungsbeispiel des Einbaus von Abwärme erzeugenden Geräten noch ein weiterer Vorteil: Ein Ausgleichselement aus Gummi oder Metall würde selbst durch die Abluft erwärmt werden und auf Grund der thermischen Leitfähigkeit noch immer einen beträchtlichen Teil der Wärme an die Innenraumluft abgeben. Der EPo-Werkstoff besitzt dagegen eine sehr geringe thermische Leitfähigkeit und reduziert auch diese Wärmequelle.

Auch in anderen Anwendungen werden die Vorteile der Erfindung genutzt. Ein erfindungsgemäßes Ausgleichselement dient insbesondere auch zum Schutz von Achsen, Wellen, Lagern, Führungen oder Maschinenbetten - vorzugsweise beweglicher Bauteile -, um ein Eindringen oder Ablagern von Schmutz zu verhindern.

Die Erfindung ist nachstehend anhand der Zeichnungen beispielsweise erläutert. In den Zeichnungen zeigen:
- **Fig. 1**: eine Schnittdarstellung des Ausgleichelementes in der Ausführungsform zum Einbau eines elektrischen Gerätes in der Ansicht von unten;
- **Fig. 2**: die Seitenansicht des Ausgleichselementes in der gleichen Ausführungsform;
- **Fig. 3**: das gleiche Ausgleichselement in der Ansicht von vorne;
- **Fig. 4**: einen Längsschnitt durch eine andere Ausführungsform des Ausgleichselementes;
- **Fig. 5**: die Ansicht auf eine weitere Ausführungsform mit einem runden Querschnitt;
- **Fig. 6**: ein Ausgleichselement in Form einer stehenden Wand mit zwei brettartigen Anschlußstücken;
- **Fig. 7**: eine Draufsicht auf das Ausgleichselement gemäß Fig. 6.

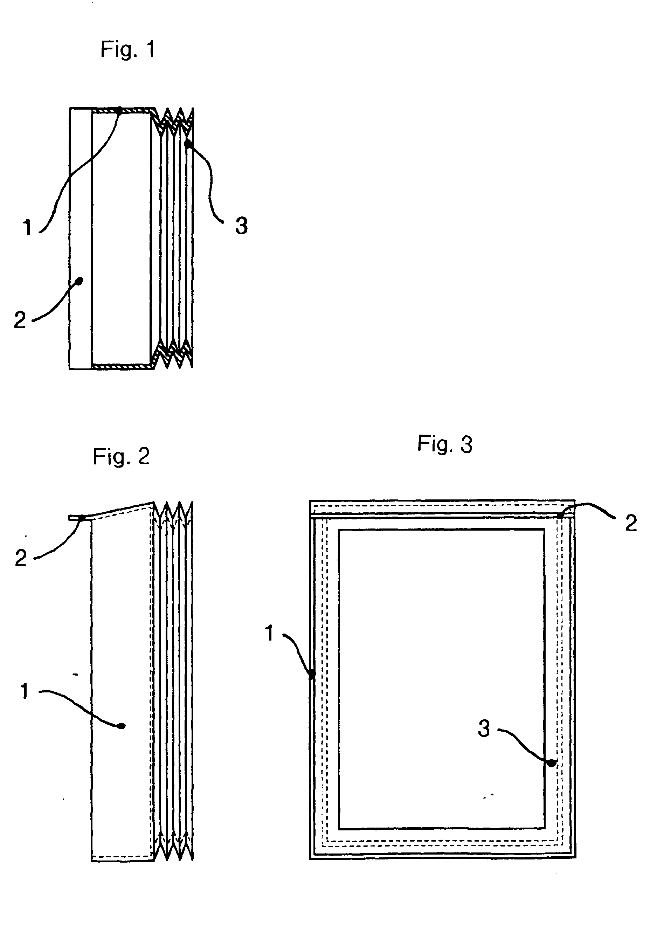

Das Ausgleichselement gemäß Fig. 1 bis Fig. 3 ist einstückig und besteht aus einem Faltenbalg 3 als Dehnelement mit symmetrischem zickzack-Profil, einem Anschlußelement 1 in Form eines einseitig an diesen angeformten Einbaurahmens 1 und einer Dichtleiste 2. Es hat in der Vorderansicht einen rechteckigen Querschnitt. Der Einbaurahmen 1 und die Dichtleiste 2 sind auf die exakten Abmessungen der Konturen des elektrischen Gerätes - hier eines nicht dargestellten Kühlschranks - zugeschnitten, so daß auf dieser Seite des Ausgleichselementes ein hohes Maß an Abdichtung erzielt wird. Der Faltenbalg 3 verfügt über ausreichende Flexibilität, um den Längenausgleich zwischen der Rückseite des Einbaukühlschranks und der dieser gegenüberliegenden Wand zu gewährleisten. Die Elastizitätseigenschaften des Ausgleichselementes erlauben auch eine Anpassung des Faltenbalges an eine eventuell gegebene leichte Neigung oder Rundung dieser Wand. Das Ausgleichelement ist daher in dieser Form insbesondere zum abdichtenden Einbau in Fahrzeugen besonders gut geeignet.

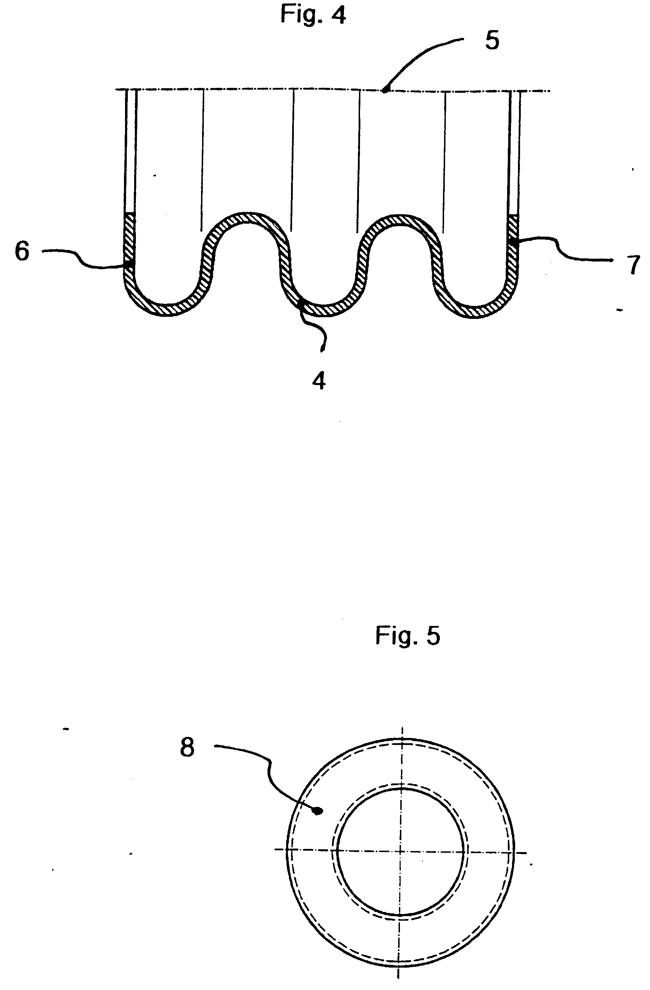

In der Ausführungsform der Fig. 4 haben die Falten des Faltenbalges 4 ein rundes Profil. An seinen beiden Enden hat das Ausgleichselement je eine gerade, zur Längsachse 5 gerichtete, durchbrochene Wand 6, 7, die man beispielsweise in eine Ringnut einsetzen kann und die bei diesem Ausführungsbeispiel das Anschlußelement 1 bildet.

In Fig. 5 ist ein Balg 8 mit rundem Querschnitt dargestellt, der in dieser Form beispielsweise zum Schutz einer Welle oder Achse und/oder der entsprechenden Lager vor Schmutzpartikel verwendet werden kann.

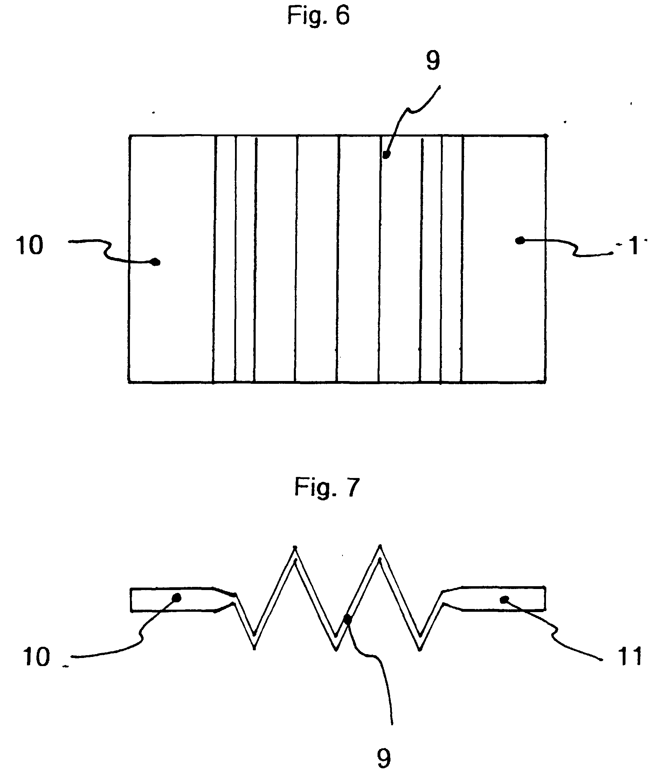

Das in den Figuren 6 und 7 gezeigte Ausgleichselement hat im Gegensatz zu den vorherigen in der Ebene senkrecht zur Ausgleichsrichtung keinen geschlossenen sondern einen offenen Querschnitt. An den beiden Enden in Ausgleichsrichtung ist an das Dehnelement 9 je eine brettartige Dicht- und Montageleiste 10, 11 als Anschlußelement 1 einstückig angeformt.

## Patentansprüche

1. Ausgleichselement für Fugen,
**dadurch gekennzeichnet**,
daß es als aus EPo-Schaum (expandierte Polyolefin-Partikel) bestehender Faltenbalg (3,4,9) ausgeformt ist
und in Ausgleichsrichtung mindestens an seinem einen Ende ein einstückig angeformtes eigenstabiles Anschlußelement (1,6,7,10,11) aufweist.

2. Ausgleichselement nach Anspruch 1,
**dadurch gekennzeichnet**, daß es in der Ebene senkrecht zur Ausgleichsrichtung betrachtet ringförmig geschlossen ist und insbesondere einen mehrkantigen oder runden Querschnitt aufweist (Fig. 3,5).

3. Ausgleichselement nach einem der Ansprüche 1 oder 2,
**dadurch gekennzeichnet**, daß das Anschlußelement (1) brettförmig gestaltet ist (Fig. 6,7).

4. Ausgleichselement nach Anspruch 2 und 3,
**dadurch gekennzeichnet**, daß das Anschlußelement (1) als ringförmig geschlossener Rahmen ausgebildet ist (Fig. 1,2,3).

5. Ausgleichselement nach einem der Ansprüche 1 bis 4,
**dadurch gekennzeichnet**, daß an das Anschlußelement (1) und/oder an das in Ausgleichsrichtung freie Ende des Faltenbalgs (3) eine oder mehrere Dichtkante/n oder -lippe/n (2) einstückig angeformt ist/sind.

6. Ausgleichselement mindestens nach Anspruch 4,
**dadurch gekennzeichnet**, daß der lichte Querschnitt des Einbaurahmens (1) den entsprechenden Konturen eines einzubauenden Gerätes im wesentlichen eng anliegend folgt und die Länge des Faltenbalges (3) des Ausgleichselementes in Ausgleichsrichtung größer ist als die zu überbrückende Fuge.

7. Ausgleichselement nach einem der Ansprüche 1 bis 6,
**dadurch gekennzeichnet**, daß die Werkstoffdichte des ausgeformten EPo-Schaums zwischen 18 kg/m³ und 120 kg/m³ beträgt.
